# EUROPEAN PATENT APPLICATION

(11) **EP 4 693 821 A1**
(43) Date of publication of application: **11.02.2026**
(21) Application number: 25192904.8
(22) Date of filing: 30.07.2025
(51) Int. Cl.: H02J 50/12, H02J 50/80

(54) **ADAPTIVE NEGATIVE AMPLITUDE SHIFT KEYING (ASK) MODULATION FOR WIRELESS CHARGING**

(30) Priority: 09.08.2024 US 202463681446 P; 02.07.2025 US 202519257570
(71) Applicant: GOOGLE LLC, Mountain View CA 94043 (US)
(72) Inventor: WANG, Li, Mountain View, 94043 (US); JIA, Liang, Mountain View, 94043 (US); LI, Yanchao, Mountain View, 94043 (US); SAGGINI, Stefano, 20124 Milano (IT)
(74) Representative: Marks & Clerk GST

(57) **Abstract**

An example device includes a rectifier that converts an AC signal received at an AC side of the rectifier from a wireless charging receive coil into a DC power signal output at a DC side of the rectifier; a first capacitor connected to an upper rail of the AC side; a second capacitor connected to a lower rail of the AC side; a first switch between the first capacitor and a ground; a second switch between the second capacitor and the ground; and a controller configured to: toggle the first switch and the second switch to communicate with an external device; determine, based on a comparison of voltage levels measured at the computing device, whether to set the switches as open or closed when not communicating; and set, responsive to determining to set the switches as closed, the first switch and the second switch as closed when not communicating.

## Description

This application claims the benefit of US Provisional Patent Application No. 63/681,446, filed 9 August 2024, the entire contents of which is incorporated herein by reference.

### BACKGROUND

Computing devices, such as smartphones, laptops, wearable devices, and tablets, may include wireless charging capabilities. Computing devices may operate as wireless charging source devices that wirelessly provide power or wireless charging sink devices that wirelessly receive power. For instance, a wireless charging sink device may include a receiver coil and other components capable of transducing a magnetic field into an electrical power signal that may be used to charge a battery of the computing device or otherwise operate components of the computing device. Similarly, a wireless charging source device may include a power supply that output a signal to a transmitter coil that causes the transmitter coil to generate a magnetic field. A controller of the wireless charging source device may adjust operation of the power supply to control an amount of power provided and/or properties of the electrical power signal at the wireless charging receive device.

### BRIEF SUMMARY

In general, this disclosure is directed to a wireless charging sink device that utilizes adaptive negative modulation for wireless charging communication. During transfer of power from a wireless charging source device (hereinafter, a source device) to a wireless charging sink device (hereinafter, a sink device), it may be desirable for the sink device to communicate with the source device. In some examples, the sink device may communicate with the sink device by modulating its load (e.g., to communicate via amplitude shift keying (ASK)). For instance, the sink device may include modulation capacitors that are switched in and out to perform the impedance modulation. During ASK communication, a controller of the sink device may selectively couple the modulation capacitors to ground. For instance, the controller may decouple the modulation capacitors to ground to send a "0" symbol and decouple the modulation capacitors from ground to send a "1" symbol. When not communicating, the controller may couple the modulation capacitors from ground.

The depth of modulation may be a function of a capacitance of the modulation capacitors and/or circuitry downstream from the capacitors. Larger capacitors may provide increased modulation depth. However, it may not be desirable to increase the capacitance. For instance, chargers with greater capacitance may be larger and/or more costly, and may result in higher voltage ripples. Circuitry downstream from the capacitors, such as non-regulated switching cap chargers, may decrease the modulation depth. Reduced modulation depth may decrease a signal to noise ratio (SNR) of the communication signal between the sink device and the source device, which may result in disconnections and/or cessation of power transfer.

In accordance with one or more aspects of this disclosure, a sink device may implement adaptive negative ASK modulation for wireless charging communications. For instance, a controller of the sink device may adaptively determine whether or not the modulation capacitors should be coupled to ground when not actively communicating (e.g., when not actively sending symbols). The controller may base the determination on voltage levels measured at the sink device. For instance, when not actively communicating, the controller may selectively leave the modulation capacitors connected to ground or disconnected from ground such that a voltage level at an output of a rectifier of the sink device (V_{rec}) will be lower when actively communicating than when not actively communicating (e.g., such that V_{rec_ASK} < V_{rec_norm}). Having the voltage level at the output of the rectifier (V_{rec}) being lower when actively communicating than when not actively communicating may provide various benefits. For instance, if the voltage level at the output of the rectifier (V_{rec}) drops, a load current (e.g., a battery charging current) at the sink device will change, such change may amplify the load modulation effect and result in large voltage differences measured at the source device. In this way, aspects of this disclosure may improve ASK communication for wireless charging.

There may be provided an example device that includes a rectifier that converts an AC signal received at an AC side of the rectifier from a wireless charging receive coil into a DC power signal output at a DC side of the rectifier; a first capacitor connected to an upper rail of the AC side; a second capacitor connected to a lower rail of the AC side; a first switch between the first capacitor and a ground; a second switch between the second capacitor and the ground; and a controller configured to: toggle the first switch and the second switch to communicate with an external device; determine, based on a comparison of voltage levels measured at the computing device, whether to set the switches as open or closed when not communicating; and set, responsive to determining to set the switches as closed, the first switch and the second switch as closed when not communicating.

In one example, a device includes a wireless charging receive coil that transduces, into an alternating current (AC) power signal, a magnetic field generated by a wireless charging transmit coil of an external device; a rectifier that converts the AC signal received at an AC side of the rectifier into a direct current (DC) power signal output at a DC side of the rectifier; a power converter configured to generate, using electrical energy received via the DC side of the rectifier, a load power signal; a load configured to operate using the load power signal; a first modulation capacitor connected to an upper rail of the AC side; a second modulation capacitor connected to a lower rail of the AC side; a first switch configured to selectively couple the first modulation capacitor to a ground; a second switch configured to selectively couple the second modulation capacitor to the ground; and a controller configured to: toggle the first switch and the second switch to communicate with the external device; determine, based on a comparison of voltage levels measured at the computing device, whether to set the first switch and the second switch as open or closed when not communicating with the external device; and set, responsive to determining to set the first switch and the second switch as closed when not communicating with the external device, the first switch and the second switch as closed when not communicating with the external device.

The controller may be further configured to: obtain an on voltage level at the DC side of the rectifier when the first switch and the second switch are closed; and obtain an off voltage level at the DC side of the rectifier when the first switch and the second switch are open.

To determine whether to set the first switch and the second switch as open or closed when not communicating with the external device, the controller may be configured to determine to set the first switch and the second switch as closed when not communicating with the external device responsive to determining that the on voltage level is greater than the off voltage level.

To determine whether to set the first switch and the second switch as open or closed when not communicating with the external device, the controller may be configured to determine to set the first switch and the second switch as open when not communicating with the external device responsive to determining that the off voltage level is greater than the on voltage level.

The computing device may further comprise a low-dropout regulator (LDO) configured to generate, using a first DC power signal received via the DC side of the rectifier, a second DC power signal, wherein the power converter is configured to generate the load power signal using the second DC power signal.

The controller may be further configured to: obtain, when the first switch and the second switch are closed, a voltage level of the first DC power signal and a voltage level of the second DC power signal.

To determine whether to set the first switch and the second switch as open or closed when not communicating with the external device, the controller may be configured to determine to set the first switch and the second switch as closed when not communicating with the external device responsive to determining that the obtained voltage level of the first DC power signal is greater than the obtained voltage level of the second DC power signal.

To determine whether to set the first switch and the second switch as open or closed when not communicating with the external device, the controller may be configured to determine to set the first switch and the second switch as open when not communicating with the external device responsive to determining that the obtained voltage level of the second DC power signal is greater than the obtained voltage level of the first DC power signal.

The computing device may not include an intervening low-dropout regulator (LDO) between the rectifier and the power converter.

The power converter may comprise an unregulated power converter.

The power converter may be a first power converter that generates a first converted power signal to operate the electrical load. The device may further comprise a second power converter that is configured to generate a second converted power signal to operate the electrical load.

The second power converter may comprise a regulated power converter included in a power management integrated circuit (PMIC).

To communicate with the external device, the controller may be configured to send, to the external device, a request to adjust an amount of power transferred from the external device to the computing device.

In another example, a method includes generating, by a rectifier of a mobile computing device, a rectified power signal using electrical energy received from an external device via a wireless link between the mobile computing device and the external device; generating, by a power converter of the mobile computing device and from the rectified power signal, a converted power signal; operating, by an electrical load of the mobile computing device, using the converted power signal; communicating, by a controller of the mobile computing device and with the external device, by toggling a first switch and a second switch, the first switch selectively coupling a first modulation capacitor between an upper rail of an AC side of the rectifier to ground, and the second switch selectively coupling a second modulation capacitor between a lower rail of the AC side of the rectifier to ground; determining, by the controller and based on a comparison of voltage levels measured at the mobile computing device, whether to set the first switch and the second switch as open or closed when not communicating with the external device; and responsive to determining to set the first switch and the second switch as closed when not communicating with the external device, setting the first switch and the second switch as closed when not communicating with the external device.

The method may further comprise: obtaining an on voltage level at a direct current (DC) side of the rectifier when the first switch and the second switch are closed; and obtaining an off voltage level at the DC side of the rectifier when the first switch and the second switch are open. Determining whether to set the first switch and the second switch as open or closed when not communicating with the external device may comprise determining to set the first switch and the second switch as closed when not communicating with the external device responsive to determining that the on voltage level is greater than the off voltage level.

The method may further comprise generating, by a low-dropout regulator (LDO) and using a first DC power signal received via a direct current (DC) side of the rectifier, a second DC power signal.

The method may further comprise obtaining, when the first switch and the second switch are closed, a voltage level of the first DC power signal and a voltage level of the second DC power signal. Determining whether to set the first switch and the second switch as open or closed when not communicating with the external device may comprise determining to set the first switch and the second switch as closed when not communicating with the external device responsive to determining that the obtained voltage level of the first DC power signal is greater than the obtained voltage level of the second DC power signal.

Additional features, advantages, and embodiments of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

FIG. 1 is a block diagram illustrating a system that includes a wireless charging source device and a wireless charging sink device, in accordance with one or more aspects of this disclosure.
FIG. 2 is a block diagram illustrating further details of an example sink device, in accordance with one or more aspects of this disclosure.
FIG. 3 is a block diagram illustrating further details of an example sink device, in accordance with one or more aspects of this disclosure.
FIG. 4 is a block diagram illustrating further details of an example sink device, in accordance with one or more aspects of this disclosure.
FIG. 5 is a block diagram illustrating further details of an example sink device, in accordance with one or more aspects of this disclosure.
FIG. 6 is a block diagram illustrating an example system, in accordance with various aspects of this disclosure.
FIG. 7 is a flowchart illustrating an example technique for combined voltage and current loop control of wireless charging, in accordance with one or more aspects of this disclosure.

### DETAILED DESCRIPTION

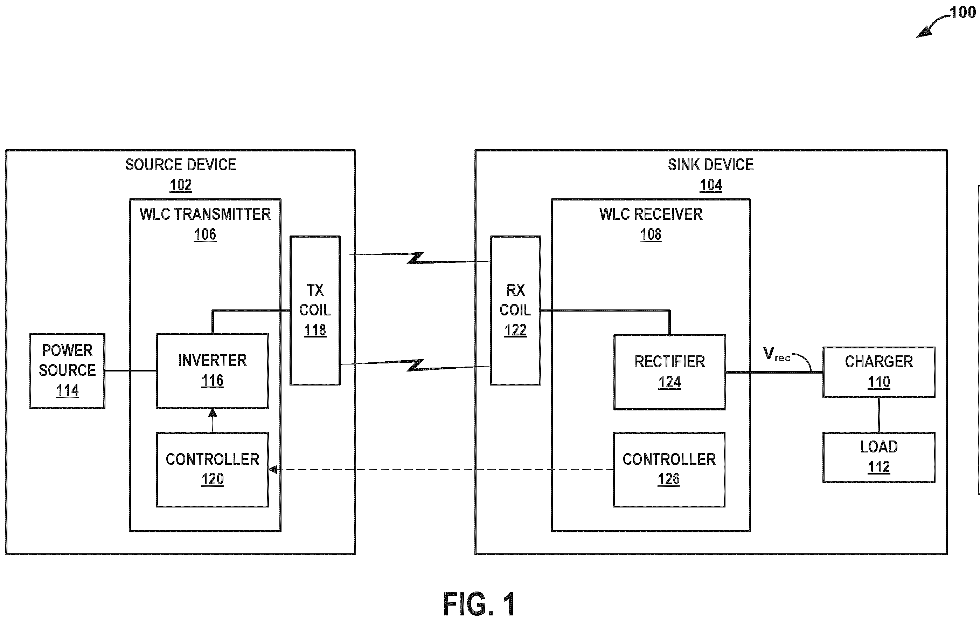

FIG. 1 is a block diagram illustrating a system that includes a wireless charging source device and a wireless charging sink device, in accordance with one or more aspects of this disclosure. As shown in FIG. 1, system 100 may include wireless charging source device 102 ("source device 102") and wireless charging sink device 104 ("sink device 104").

Source device 102 may be any type of device that wirelessly provides power to another device. Examples of source device 102 include, but are not limited to, a charging pad, an alarm clock, a power bank, a mobile phone, a camera device, a tablet computer, a smart display, a laptop computer, a desktop computer, a gaming system, a media player, an e-book reader, a television platform, a vehicle infotainment system or head unit, a vehicle surface with integrated charging, or a wearable computing device (e.g., a computerized watch, a head mounted device such as a VR/AR headset, computerized eyewear, a computerized glove). As shown in FIG. 1, source device 102 may include wireless charging (WLC) transmitter 106 and power source 114.

Power source 114 may be any component capable of providing electrical power to other components of source device 102. Examples of power source 114 include, but are not limited to, batteries, solar panels, wall adapters, wireless charging receive coils, etc. As shown in FIG. 1, power source 114 may provide electrical power (e.g., direct current (DC) electrical power) to WLC transmitter 106.

WLC transmitter 106 may be configured to wirelessly provide power to another device. In some examples, WLC transmitter 106 may be compliant with (e.g., operate in accordance with) a wireless charging standard such as the Qi specification published by the Wireless Power Consortium (e.g., available at wirelesspowerconsortium.com/knowledge-base/specifications/download-the-qi-specifications.html). As shown in FIG. 1, WLC transmitter 106 may include inverter 116 and controller 120.

Inverter 116 may be configured to convert a direct current (DC) signal into an alternating current (AC) signal. For instance, inverter 116 may convert a DC power signal received from power source 114 into an AC power signal, and provide the AC power signal to transmitter (Tx) coil 118. As discussed in further detail below, in some examples, inverter 116 may be an active full bridge inverter that includes a plurality of switches. Operation of the plurality of switches may be controlled by a controller, such as controller 120.

Controller 120 may be configured to control operation of one or more components of WLC transmitter 106. For instance, controller 120 may include circuitry configured to control operation of inverter 116. As one example, the circuitry of controller 120 may adjust one or more of a voltage level of the DC signal provided to inverter 116, a switching frequency of switches of inverter 116, and/or a duty cycle of the switches of inverter 116. Examples of controller 120 include, but are not limited to, one or more digital signal processors (DSPs), general purpose microprocessors, application specific integrated circuits (ASICs), field programmable logic arrays (FPGAs), systems on a chip (SoC), or other equivalent integrated or discrete logic circuitry, or analog circuitry.

Tx coil 118 may be configured to generate a magnetic field proportional to a power signal flowing through Tx coil 118. For instance, Tx coil 118 may generate a magnetic field having properties proportional to the AC power signal output to Tx coil 118 from inverter 116.

Sink device 104 may be any type of device that operates at least in part using power wirelessly received from another device. Examples of sink device 104 include, but are not limited to, a power bank, a mobile phone, a camera device, a tablet computer, a smart display, a laptop computer, a desktop computer, a gaming system, a media player, an e-book reader, a television platform, or a wearable computing device. As shown in FIG. 1, sink device 104 may include wireless charging (WLC) receiver 108, charger 110, and load 112.

WLC receiver 108 may be configured to wirelessly receive power from another device. In some examples, WLC receiver 108 may a wireless power module and may be compliant with (e.g., operate in accordance with) a wireless charging standard such as the Qi specification published by the Wireless Power Consortium (e.g., available at wirelesspowerconsortium.com/knowledge-base/specifications/download-the-qi-specifications.html). As shown in FIG. 1, WLC receiver 108 may include rectifier 124, and controller 126. WLC receiver 108 may be an integrated circuit (IC), which may be referred to as a wireless charging IC.

Receiver (Rx) coil 122 may be configured to transduce a magnetic field into a power signal. For instance, Rx coil 122 may transduce the magnetic field generated by Tx coil 118 into an AC power signal having properties proportional to the magnetic field (e.g., and thus proportional to AC power signal output to Tx coil 118 from inverter 116). Rx coil 122 may output the transduced AC power signal to one or more components of WLC receiver 108, such as rectifier 124.

Rectifier 124 may be configured to convert an AC signal into a DC signal. For instance, rectifier 124 may convert an AC power signal received from Rx coil 122 into a DC power signal, and provide the DC power signal to another component of sink device 104, such as charger 110. Rectifier 124 may be considered to have an AC side (e.g., at which the AC power signal is received from Rx coil 122) and a DC side (e.g., at which the DC power signal is output). In some examples, rectifier 124 may be an active full bridge rectifier that includes a plurality of switches. In this sense, rectifier 124 may be considered to be an active rectifier. Operation of the plurality of switches may be controlled by a controller, such as controller 126. In some examples, rectifier 124 may be a passive rectifier, such as a bridge formed entirely of passive diodes.

Controller 126 may be configured to control operation of one or more components of WLC receiver 108. For instance, controller 126 may include circuitry configured to control operation of rectifier 124. As one example, the circuitry of controller 126 may adjust one or more of a switching frequency of switches of rectifier 124, and/or a duty cycle of the switches of rectifier 124. Examples of controller 126 include, but are not limited to, one or more digital signal processors (DSPs), general purpose microprocessors, application specific integrated circuits (ASICs), field programmable logic arrays (FPGAs), systems on a chip (SoC), or other equivalent integrated or discrete logic circuitry, or analog circuitry.

Components of sink device 104 may utilize the DC power signal output by WLC receiver 108 to perform various operations. For instance, charger 110 may utilize the DC power signal output by WLC receiver 108 to provide power to load 112.

Charger 110 may represent a regulated or an unregulated charger. Where charger 110 is a regulated charger, charger 110 may include positive control components that maintain a power signal output by charger 110 at a target level (e.g., at a target current level or a target voltage level). Where charger 110 is an unregulated charger, charger 110 may, without regulation, generate the power signal with a fixed multiple level of the DC power signal output by WLC receiver 108. For instance, charger 110 may be a 2:1 unregulated charger than generates a power signal having double a current level and half a voltage level of the DC power signal output by WLC receiver 108. Other ratios are contemplated, such as 4:1 etc.

Load 112 may represent components of sink device 104 that utilize electrical power. Load 112 may include one or more of, power storage devices (e.g., batteries), processors (e.g., application or other processors), data storage devices, display devices, and the like.

Reliable communication between sink device 104 and source device 102 may be beneficial to a reliability of the power transfer process. Source device 102 and/or sink device 104 may utilize communication to determine interoperability, exchange charging data, and other operations.

As noted above, sink device 104 and source device 102 may be compliant with one or more wireless charging standards, such as the Qi standard. In utilizing the in-band communication technique of Qi, source device 102 and sink device 104 may utilize the wireless power transfer channel to convey data. For the Tx-Rx (source device 102 to sink device 104) communication, source device 102 may modulate the data by switching its operating frequency. Controller 126 of sink device 104 may detect this frequency difference and interpret it as digital signal 1s and 0s. Thus, data can be transferred from source device 102 to sink device 104. For the Rx-Tx (sink device 104 to source device 102) communication, sink device 104 may modulate its load (e.g., impedance), resulting in a current amplitude variation at source device 102. Controller 120 of source device 102 may detect this variation and interpret it as digital signals as well. Thus, data can be transferred from sink device 104 to source device 102.

Both Tx-Rx and Rx-Tx communication may use a shift-keying scheme to modulate digital bits with frequency variations or amplitude variations. The Tx-Rx communication modulates the operating frequency, thus named as Frequency Shift Keying (FSK). The Rx-Tx communication is named Amplitude Shift Keying (ASK) because it modulates the amplitude of waveforms. As discussed above, sink device 104 may modulate its load to cause waveform amplitude modulation, and such modulation may result in a current amplitude variation at source device 102. Sink device 104 may include one or more modulation capacitors and one or more switches that are collectively used to modulate the impedance of sink device 104. For instance, sink device 104 may include a first modulation capacitor and first switch between a high rail of an alternating current (AC) side of rectifier 124 and a second modulation capacitor and second switch between a low rail of the AC side of rectifier 124. Controller 126 may control operation of the switches to communicate. For instance, controller 126 may open the first switch and the second switch to send a "0" symbol and close the first switch and the second switch to send a "1" symbol.

Controller 126 may communicate various requests to source device 102. For instance, controller 126 may output power requests to source device 102 to control (e.g., increase, decrease, or maintain) an amount of power wirelessly transferred from source device 102 to sink device 104.

As discussed above, controller 126 may selectively connect modulation capacitors to communicate with source device 102. In previous communication techniques, when not actively communicating (e.g., when not actively sending symbols to source device 102), controller 126 may decouple (e.g., disconnect) the modulation capacitors. Circuitry downstream from the capacitors, such as non-regulated switching cap chargers, may decrease the modulation depth. Reduced modulation depth may decrease a signal to noise ratio (SNR) of the communication signal between sink device 104 and source device 102, which may result in disconnections and/or cessation of power transfer.

In accordance with one or more aspects of this disclosure, sink device 104 may implement adaptive negative ASK modulation for wireless charging communications. For instance, controller 126 of sink device 104 may adaptively determine whether or not the modulation capacitors should be coupled to ground when not actively communicating (e.g., when not actively sending symbols). Controller 126 may base the determination on voltage levels measured at sink device 104. For instance, when not actively communicating, controller 126 may selectively leave the modulation capacitors connected to ground or disconnected from ground such that a voltage level at an output of rectifier 124 (V_{rec}) will be lower when actively communicating than when not actively communicating (e.g., such that V_{rec_ASK} < V_{rec_norm}). Having the voltage level at the output of rectifier 124 (V_{rec}) being lower when actively communicating than when not actively communicating may provide various benefits. For instance, if the voltage level at the output of rectifier 124 drops, a load current (e.g., a battery charging current) at sink device 104 will change, such change may amplify the load modulation effect and result in large voltage differences measured at source device 102. In this way, aspects of this disclosure may improve ASK communication for wireless charging.

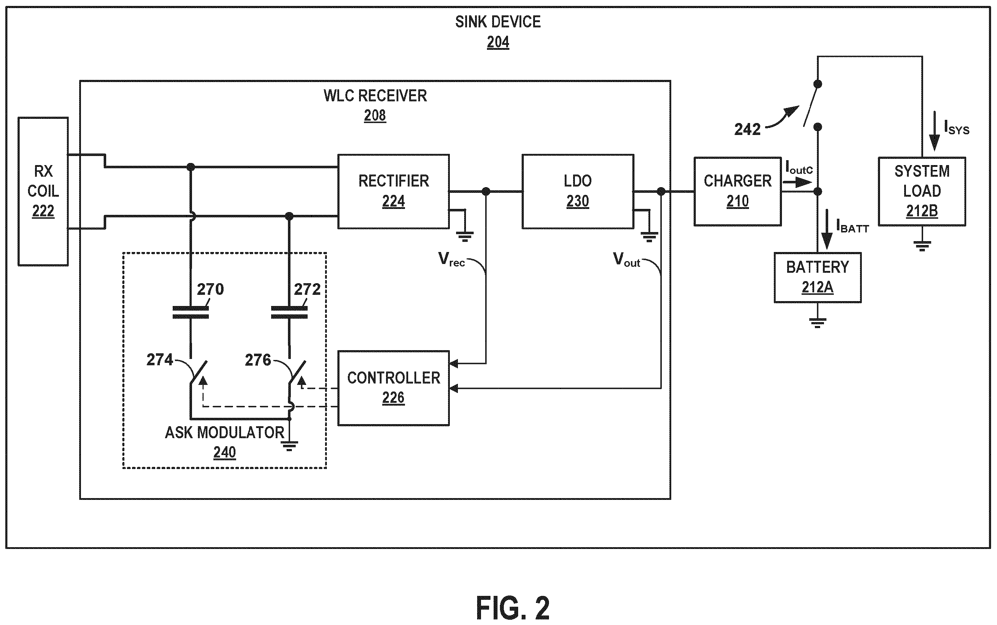

FIG. 2 is a block diagram illustrating further details of an example sink device, in accordance with one or more aspects of this disclosure. Sink device 204 of FIG. 2 may be an example of sink device 104 of FIG. 1. Similarly, WLC receiver 208, charger 210, loads 212A/212B (collectively, "loads 212"), Rx coil 222, rectifier 224, and controller 226 of FIG. 2 may respectively be examples of WLC receiver 108, charger 110, load 112, Rx coil 122, rectifier 124, and controller 126 of FIG. 1. As shown in FIG. 2, sink device 204 may further include load switch 242, low-dropout regulator (LDO) 230, and ASK modulator 240.

Loads 212 may include battery 212A and system load 212B. Battery 212A may be a power storage device that may store and supply electrical energy to operate sink device 204. System load 212B may represent power consuming devices of sink device 204 other than battery 212A. System load 212B may include displays, speakers, processors, data storage devices, and the like.

Load switch 242 may selectively couple system load 212B to charger 210. When load switch 242 is open, the power signal generated by charger 210 may be entirely directed to battery 212A with a current level of I_{Batt}. When load switch 242 is closed system load 212B may receive a power signal from charger 210 with a current level of I_{sys} (e.g., such that the power signal generated by charger 210 is divided amongst battery 212A and system load 212B. As discussed in further detail below, sink device 204 may include an additional charger that may supply system load 212B with power when load switch 242 is open. In other words, when load switch 242 is open, I_{Batt} is equal to I_{outC}, when load switch 242 is closed, I_{Batt}+I_{sys} is equal to I_{outC}.

As discussed above, in some examples, charger 210 may be an unregulated charger. For instance, charger 210 may be 2:1 unregulated charger such that a voltage level of a power signal output by charger 210 is half a voltage level of a power signal received by charger 210 and a current level of the power signal output by charger 210 is double a current level of the power signal received by charger 210 (e.g., I_{outC} = 2* I_{outWLC}).

LDO 230 may be a low-dropout regulator configured to generate, using a first DC power signal received via the DC side of the rectifier (e.g., having voltage level V_{rec}), a second DC power signal (e.g., having voltage level Vₒᵤₜ). As shown in the example of FIG. 2, charger 210 may be configured to generate the load power signal (e.g., having current level I_{outC}) using the second DC power signal.

As shown in FIG. 2, ASK modulator 240 may include modulation capacitors 270 and 272, along with corresponding switches 274 and 276. Modulation capacitor 270 may be connected to a high side (e.g., an upper rail) of the AC side of rectifier 224 and modulation capacitor 272 may be connected to a low side (e.g., a lower rail) of the AC side of rectifier 224. Switches 274 and 276 may selectively couple modulation capacitors 270 and 272 to a low side (e.g., a lower rail) of a DC side of rectifier 224 (e.g., a ground of sink device 204). For instance, switch 274 may connect modulation capacitor 270 to the low side of the DC side of rectifier 224 and switch 276 may connect modulation capacitor 272 to the low side of the DC side of rectifier 224.

As discussed above, in some ASK modulation schemes, modulation capacitors, such as capacitors 270 and 272, may be selectively coupled to a DC ground to modulate an impedance of sink device 204, thereby causing a current amplitude variation at a source device (e.g., source device 102). For instance, when actively communicating, to send a first symbol (e.g., a 1 or a 0), controller 226 may cause switches 274 and 276 to be open. Similarly, to send a second symbol (e.g., the other of 1 or 0 than the first symbol), controller 226 may cause switches 274 and 276 to close.

In operation, when actively communicating, if the voltage level at the output of rectifier 224 (V_{rec}) increases when switches 274 and 276 are closed, induced changes in voltage and current levels at the source device may be relatively small, and thereby have a low SNR. However, if the voltage level at the output of rectifier 224 (V_{rec}) decreases when switches 274 and 276 are closed, induced changes in voltage and current levels at the source device may be relatively large, and thereby have a high SNR. Many different parameters of sink device 204 impact whether the voltage level at the output of rectifier 224 (V_{rec}) will increase or decrease when switches 274 and 276 are closed.

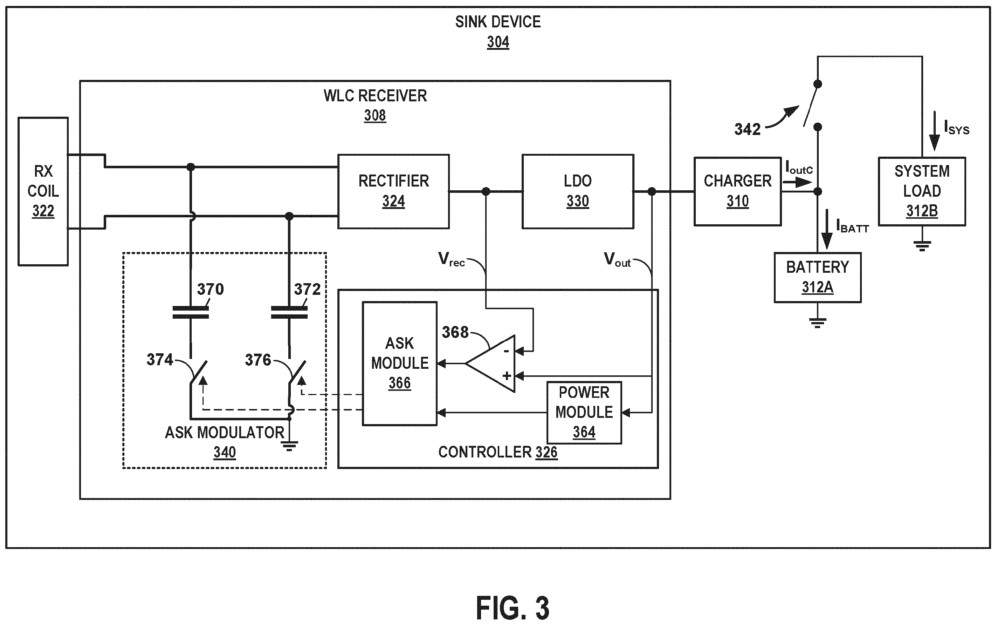

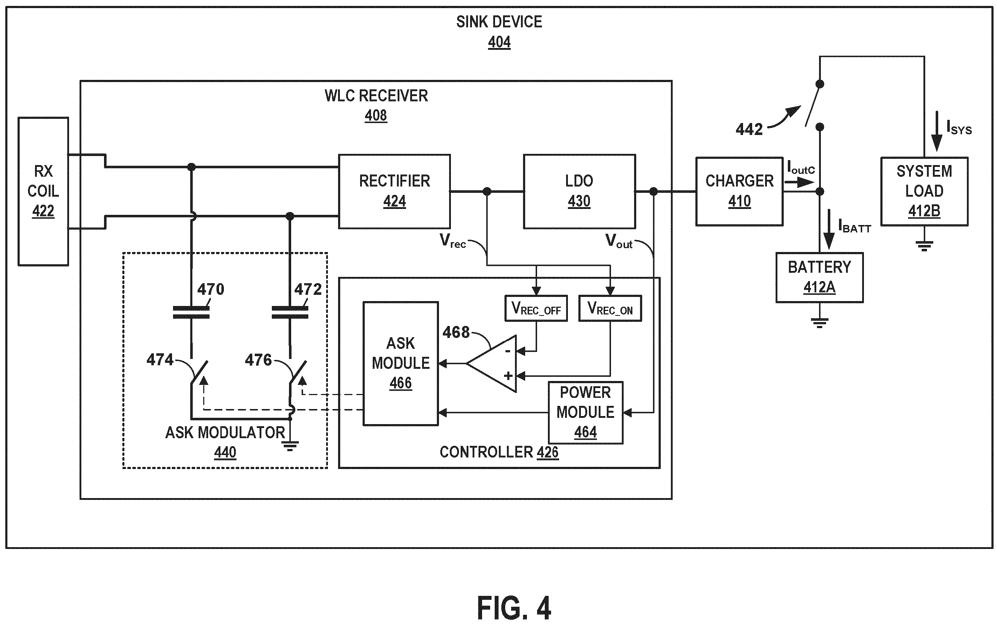

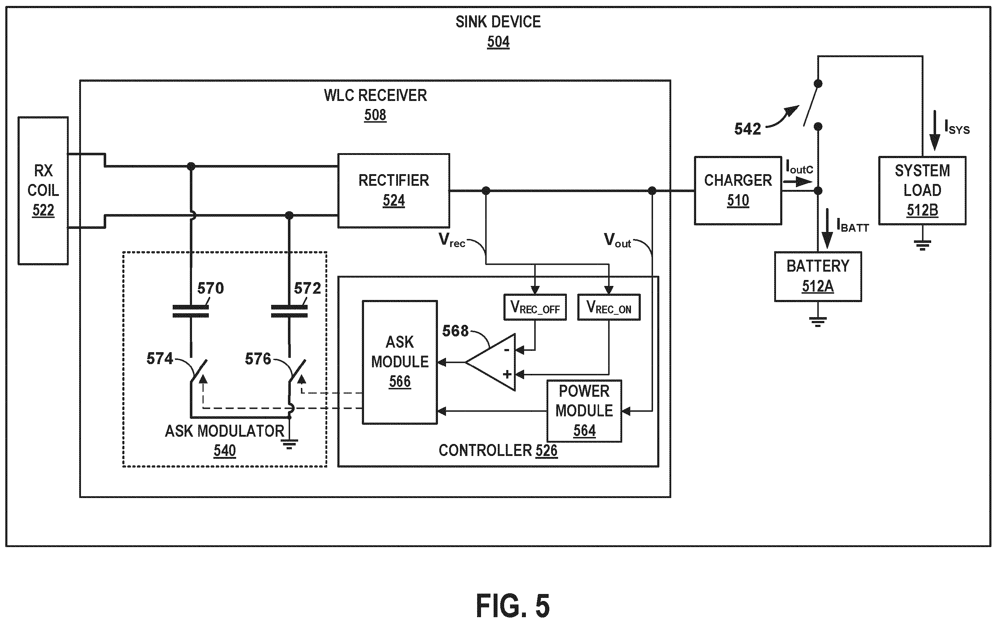

As discussed above and in accordance with one or more aspects of this disclosure, sink device 204 may implement adaptive negative ASK modulation for wireless charging communications. For instance, controller 226 of sink device 204 may adaptively determine whether or not the modulation capacitors should be coupled to ground when not actively communicating (e.g., when not actively sending symbols). Controller 226 may base the determination on voltage levels measured at sink device 104. As one example, controller 226 may base the determination on a comparison between the voltage level at an output of rectifier 224 (V_{rec}) and a voltage level at the output of LDO 230 (Vₒᵤₜ) (further details of this example are discussed below with reference to FIG. 3). As another example, controller 226 may base the determination on a comparison between a measurement of the voltage level at the output of rectifier 224 (V_{rec}) when switches 274 and 276 are closed and another measurement of the voltage level at the output of rectifier 224 (V_{rec}) when switches 274 and 276 are open (further details of this example are discussed below with reference to FIGS. 4 and 5). Other parameters on which controller 226 may base the determination include, but are not limited to, a coupling coefficient between sink device 204 and the source device, loading, and the like.

Controller 226 may perform the determination at any suitable time. In some examples, controller 226 may perform the determination while actively communicating. In some examples, controller 226 may utilize a default setting (e.g., switches open) during a charging session until controller 226 performs the determination. For instance, at the start of a charging session (e.g., when sink device 204 initially interfaces with a source device) controller 226 may initially use the default setting, then during an initial communication session, controller 226 may acquire voltage measurements and perform the determination based on the acquired voltage measurements. Following conclusion of the communication session, controller 226 may set switches 274 and 276 as open or closed based on the determination. In some examples, controller 226 may re-perform the determination during every communication session. In other examples, controller 226 may re-perform the determination during a subset of communication sessions. In other examples, controller 226 may re-perform the determination based on a clock (e.g., every 30 seconds, every 2 minutes, every 5 minutes, etc.). In other examples, controller 226 may perform the determination during an initial communication session and utilize the determined setting for all subsequent non-communication sessions during the charging session.

When not actively communicating (e.g., after conclusion of a communication session and before commencing a subsequent communication session), controller 226 may set, based on the determination, switches 274 and 276 as either open or closed. For instance, responsive to determining that setting switches 274 and 276 as closed when not actively communicating (e.g., where such a setting would result in the voltage level at the output of rectifier 224 (V_{rec}) decreasing when switches 274 and 276 are closed during a subsequent communication session), controller 226 may control switches 274 and 276 to be closed when not communicating with the source device (e.g., to couple capacitors 270 and 272). Similarly, responsive to determining that setting switches 274 and 276 as open when not actively communicating (e.g., where such a setting would result in the voltage level at the output of rectifier 224 (V_{rec}) decreasing when switches 274 and 276 are closed during a subsequent communication session), controller 226 may control switches 274 and 276 to be open when not communicating with the source device (e.g., to decouple capacitors 270 and 272).

During a communication session (e.g., when actively communicating with the source device), controller 226 may toggle switches 274 and 276 to communicate with an external device (e.g., the source device). For instance, as discussed above, controller 226 may toggle switches 274 and 276 from off to on to selectively signal 1s and 0s. In some examples, controller 226 may communicate with the external device by sending a request to adjust an amount of power transferred from the external device to sink device 204.

FIG. 3 is a block diagram illustrating further details of an example sink device, in accordance with one or more aspects of this disclosure. Sink device 304 of FIG. 3 may be an example of sink device 204 of FIG. 2. Similarly, WLC receiver 308, charger 310, loads 312A/312B (collectively, "loads 312"), Rx coil 322, rectifier 324, controller 326, LDO 330, ASK modulator 340, capacitors 370 and 372, and switches 374 and 376 of FIG. 3 may respectively be examples of WLC receiver 208, charger 210, loads 212A/212B (collectively, "loads 212"), Rx coil 222, rectifier 224, controller 226, LDO 230, ASK modulator 240, capacitors 270 and 272, and switches 274 and 276 of FIG. 2.

As shown in FIG. 3, controller 326 may include power module 364, ASK module 366, and comparator module 368. Modules 364, 366, and 368 may represent hardware or software modules executed by processors of controller 326.

Power module 364 may output messages for communication to an external device by ASK module 366. For instance, power module 364 may monitor electrical levels (e.g., voltage levels, current levels, power levels, etc.) at sink device 304 and output messages, for transmission by ASK module 366, that include a request to adjust an amount of power transferred from an external device to sink device 304. As shown in FIG. 3, power module 364 may receive a voltage level at an output of WLC receiver 308 (e.g., Vₒᵤₜ) and output requests to increase or decrease the amount of power transferred to maintain the voltage level at that output of WLC receiver 308 at a target voltage level.

ASK module 366 may perform operations to communicate with an external device. For instance, ASK module 366 may control operation of switches 374 and 376 to communicate with a source device via ASK. ASK module 336 may receive the data to communicate from various other components, such as power module 364.

As discussed above and in accordance with one or more aspects of this disclosure, controller 326 may adaptively determine whether to set switches 374 and 376 in the closed or open position when not communicating with the external device. In the example of FIG. 3, controller 326 may base the determination on a comparison between a voltage level of a first DC power signal (e.g., V_{rec}, a voltage level of a power signal at an output of rectifier 324) and a voltage level of a second DC power signal (e.g., Vₒᵤₜ, a voltage level of a power signal at an output of LDO 330).

For instance, ASK module 366 may cause switches 374 and 376 to close and, while switches 374 and 376 are closed, comparator module 368 may determine whether the voltage level of the first DC power signal is greater than the voltage level of the second DC power signal. Comparator module 368 may output, to ASK module 366, an indication of whether the measured voltage level of the first DC power signal is greater than the measured voltage level of the second DC power signal. Responsive to determining that the voltage level of the first DC power signal (V_{rec}) is greater than the voltage level of the second DC power signal (Vₒᵤₜ), ASK module 366 may determine to set switches 374 and 376 as closed when not communicating with the external device. Similarly, responsive to determining that the voltage level of the first DC power signal (V_{rec}) is not greater (e.g., is less than or equal to) than the voltage level of the second DC power signal (Vₒᵤₜ), ASK module 366 may determine to set switches 374 and 376 as open when not communicating with the external device. V_{rec_} may be equal to Vₒᵤₜ plus V_{ds} (e.g., a resistance conduction loss of LDO 330 when LDO 330 is in drop out mode).

FIG. 4 is a block diagram illustrating further details of an example sink device, in accordance with one or more aspects of this disclosure. Sink device 404 of FIG. 4 may be an example of sink device 204 of FIG. 2. Similarly, WLC receiver 408, charger 410, loads 412A/412B (collectively, "loads 412"), Rx coil 422, rectifier 424, controller 426, LDO 430, ASK modulator 440, capacitors 470 and 472, and switches 474 and 476 of FIG. 4 may respectively be examples of WLC receiver 208, charger 210, loads 212A/212B (collectively, "loads 212"), Rx coil 222, rectifier 224, controller 226, LDO 230, ASK modulator 240, capacitors 270 and 272, and switches 274 and 276 of FIG. 2.

As shown in FIG. 4, controller 426 may include power module 464, ASK module 466, and comparator module 468. Modules 464, 466, and 468 may represent hardware or software modules executed by processors of controller 426.

Power module 464 of FIG. 4 may perform operations similar to power module 364 of FIG. 3. For instance, power module 464 may monitor electrical levels (e.g., voltage levels, current levels, power levels, etc.) at sink device 404 and output messages, for transmission by ASK module 466, that include a request to adjust an amount of power transferred from an external device to sink device 404.

Similar to ASK module 366 and comparator module 368 of FIG. 3, ASK module 466 and comparator module 468 of FIG. 4 may adaptively determine whether to set switches 374 and 376 in the closed or open position when not communicating with the external device. As compared with the example of FIG. 3 in which comparator module 368 compares two different voltage levels, comparator module 468 of FIG. 4 may compare two different measurements of a same voltage level made at two different times. For instance, controller 426 may obtain an on voltage level at the DC side of the rectifier when switches 474 and 476 are closed (V_{REC_ON}), and obtain an off voltage level at the DC side of the rectifier when the switches 474 and 476 are open (V_{REC_OFF}). Controller 426 may store the measured voltage levels using local memory or any other suitable components.

Comparator module 468 may determine whether the on voltage level is greater than the off voltage level. Comparator module 468 may output, to ASK module 466, an indication of whether the on voltage level is greater than the off voltage level. Responsive to determining that the on voltage level (V_{rec_on}) is greater than the off voltage level (V_{rec_off}), ASK module 466 may determine to set switches 474 and 476 as closed when not communicating with the external device. Similarly, responsive to determining that the on voltage level is not greater (e.g., is less than or equal to) than the off voltage level, ASK module 466 may determine to set switches 474 and 476 as open when not communicating with the external device.

FIG. 5 is a block diagram illustrating further details of an example sink device, in accordance with one or more aspects of this disclosure. Sink device 504 of FIG. 5 may be an example of sink device 204 of FIG. 2. Similarly, WLC receiver 508, charger 510, loads 512A/512B (collectively, "loads 512"), Rx coil 522, rectifier 524, controller 526, LDO 530, ASK modulator 540, capacitors 570 and 572, and switches 574 and 576 of FIG. 5 may respectively be examples of WLC receiver 208, charger 210, loads 212A/212B (collectively, "loads 212"), Rx coil 222, rectifier 224, controller 226, LDO 230, ASK modulator 240, capacitors 270 and 272, and switches 274 and 276 of FIG. 2.

In general, sink device 504 of FIG. 5 may be similar to sink device 404 of FIG. 4 except that sink device 504 does not include an intervening low-dropout regulator (LDO) between rectifier 524 and charger 510 (e.g., a power converter). As such, in FIG. 5, V_{rec} may be equal to Vₒᵤₜ. Similarly, power module 564, ASK module 566, and comparator module 568 of FIG. 5 may be examples of and perform operations similar to power module 464, ASK module 466, and comparator module 468 of FIG. 4.

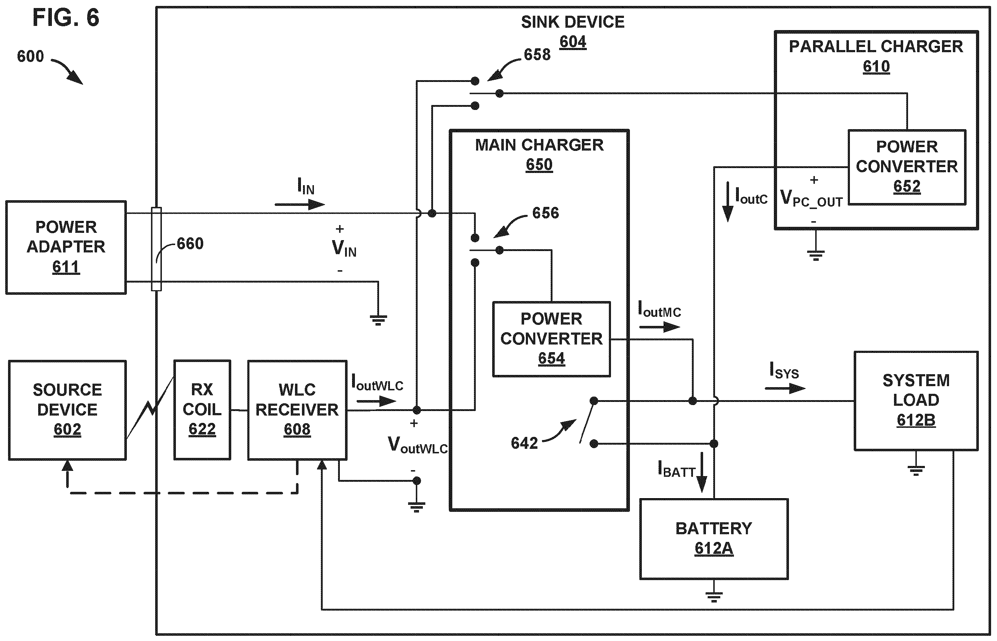

FIG. 6 is a block diagram illustrating an example of a system 600 that includes source device 602, sink device 604, and power adapter 611, in accordance with various aspects of this disclosure. Power adapter 611 may be an AC adapter, AC/DC adapter, or AC/DC converter. Power adapter 611 may be a type of external power supply, enclosed in a case (e.g., an AC plug). Power adapter 611 may also be a plug pack, plug-in adapter, adapter block, domestic mains adapter, line power adapter, wall wart, power brick, and power adapter. Power adapter 611 may contain a transformer to convert the mains electricity voltage to a lower voltage. As shown in FIG. 6, power adapter 611 may output a direct current (DC) power signal to sink device 604 having voltage level V_{IN} and current level I_{IN}.

Source device 602 may be an example of source device 102 of FIG. 1. Sink device 604 may be an example of sink device 104 of FIG. 1, sink device 204 of FIG. 2, sink device 304 of FIG. 3, or sink device 404 of FIG. 4. As shown in the example of FIG. 6, sink device 604 may include Rx coil 622, WLC receiver 608, main charger 650, parallel charger 610, loads 612A/612B (collectively, "loads 612").

System load 612B may be an example of load 112B of FIG. 1. System load 612B may include one or more of a microprocessor, a controller, a digital signal processor (DSP), an accelerated processing unit (APU), an application processor (AP), a central processing unit (CPU), a graphics processing unit (GPU), an application specific integrated circuit (ASIC), a field-programmable gate array (FPGA), or equivalent discrete or integrated logic circuitry. The functions attributed to the processing circuitry in this disclosure may be embodied as software (as noted above), firmware, hardware and combinations thereof.

Battery 612A may be an example of battery 112A of FIG. 1. For instance, battery 612A may be configured to store electrical energy for use by components of source device 102. Some examples of battery 612A include a lithium-ion battery, a nickel-cadmium battery, or any other type of rechargeable battery such as nickel-metal hydride, lead acid or lithium ion polymer. In some examples, battery 612A may represent an array of power storage devices. For instance, where sink device 604 is a foldable device, battery 612A may include a first battery in a first housing of the foldable device and a second battery in a second housing of the foldable device.

Main charger 650 may represent a circuit configured to generate a power signal to charge battery 612A and/or provide power to other components of sink device 604. For instance, main charger 650 may include power converter 654 that operates as a DC/DC power converter. Power converter 654 may be a regulated power converter in that a voltage and/or a current of the power signal output by power converter 654 may be adjusted through operation of components of power converter 654. Examples of power converter 654 include DC/DC converters such as buck, boost, buck-boost, Cuk (also known as a two-inductor inverting converter), flyback, or any other type of regulated DC/DC converter. In some examples, main charger 650 may be a power management integrated circuit (PMIC). As such, power converter 654 may be considered a regulated power converter included in a PMIC.

As shown in FIG. 6, main charger 650 may include load switch 642. Load switch 642 may be an example of load switch 242 of FIG. 2, load switch 342 of FIG. 3, load switch 442 of FIG. 4, and load switch 542 of FIG. 5.

Sink device 604 may include Rx coil 622, which may transduce a magnetic field into an AC electrical signal and provide said AC electrical signal to WLC receiver 608. Rx coil 622 may be an example of Rx coil 222 of FIG. 2, Rx coil 322 of FIG. 3, Rx coil 422 of FIG. 4, and Rx coil 522 of FIG. 5.

In operation, main charger 650 may generate heat as a byproduct of the power conversion process. For instance, where main charger 650 is a buck type power converter, the amount of heat generated by main charger 650 may be positively correlated with the voltage of the input power signal received from power adapter 611 (e.g., higher voltages may result in greater amounts of heat). Components of main charger 650 may be selected to produce an acceptable amount of heat at a particular voltage of the input power signal (e.g., at 5 volts). However, some charging standards may allow for increased voltage levels of the input power signal to, e.g., decrease charging time. To enable sink device 604 to take advantage of such increased voltage levels, sink device 604 may include a second charger circuit, such as parallel charger 610, that may generate less heat at higher voltage levels of the input power signal than main charger 650.

Parallel charger 610 and main charger 650 may be configured such that only one of parallel charger 610 and main charger 650 provides a power signal to charge battery 612A at any given time. For instance, main charger 650 may generate, during a first time period and using electrical energy received from a power source external to the device (e.g., power adapter 611), a first power signal to charge battery 612A. Parallel charger 610 may generate, during a second time period that is non-overlapping with the first time period, using electrical energy received from the power source, a second power signal to charge battery 612A. In some examples, parallel charger 610 and main charger 650 may operate at the same time (e.g., contemporaneously) to accomplish different tasks. For instance, at a particular time, parallel charger 610 may convert a power signal received from power adapter 611 to charge battery 612A while main charger 650 generates a power signal to charge another device (e.g., such that sink device 104 may simultaneously charge battery 612A and provide power to another device via wireless transfer). As such, parallel charger 610 may be considered to be a first power converter that generates a first converted power signal to charge a power storage device (e.g., battery 612A) and operate an electrical load (e.g., system load 612B), main charger 650 may be considered to be a second power converter that is configured to generate a second converted power signal to charge the power storage device and operate the electrical load.

Parallel charger 610 may be an example of charger 110 of FIG. 1, charger 210 of FIG. 2, charger 310 of FIG. 3, charger 410 of FIG. 4, and charger 510 of FIG. 5. As shown in FIG. 6, parallel charger 610 may include power converter 652. In some examples, parallel charger 610 may be an unregulated power converter. For instance, power converter 652 of parallel charger 610 may be a 2:1 switch-capacitor power converter that converts the input power signal into an output power signal with half the voltage and twice the current (e.g., V_{PC_OUT}=V_{outWLC}/2 and I_{outC}=2*I_{outWLC}). In examples where parallel charger 610 is an unregulated power converter, processing circuitry sink device 604 may provide regulation of the amount of current provided to battery 612A via communication with power adapter 611 and/or source device 602. For instance, parallel charger 610 may output a representation of the amount of current flowing through parallel charger 610. Based on the amount of current flowing through parallel charger 610, processing circuitry of system load 612B (e.g., an application processor) may output a request to source device 602 to change the amount of power transferred from source device 602 to sink device 604.

Sink device 604 may include WLC receiver 608, which may be an example of WLC receiver 208 of FIG. 2, WLC receiver 308 of FIG. 3, WLC receiver 408 of FIG. 4, and WLC receiver 508 of FIG. 5. WLC receiver 608 may perform operations similar to WLC receiver 208 of FIG. 2, WLC receiver 308 of FIG. 3, WLC receiver 408 of FIG. 4, and WLC receiver 508 of FIG. 5. For instance, WLC receive 608 may adaptively set modulation capacitor control switches as on or off when not actively communicating with source device 602 via ASK.

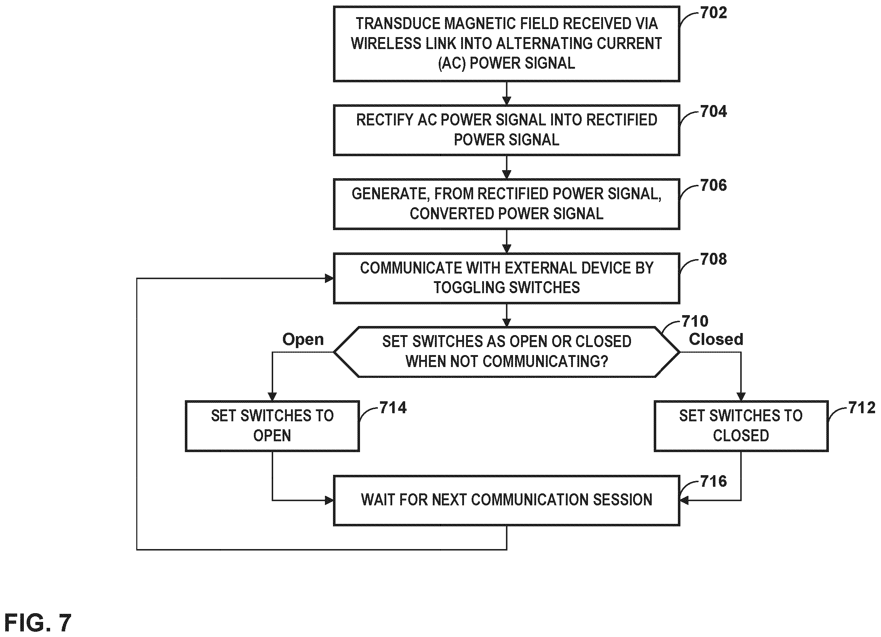

FIG. 7 is a flowchart illustrating an example technique for combined voltage and current loop control of wireless charging, in accordance with one or more aspects of this disclosure. For purposes of explanation, the technique of FIG. 7 is described as being performed by sink device 204 of FIG. 2. However, the technique of FIG. 7 may be performed by a wireless sink device, such as sink device 104 of FIG. 1, sink device 204 of FIG. 2, sink device 304 of FIG. 3, sink device 404 of FIG. 4, sink device 504 of FIG. 5, or sink device 604 of FIG. 6.

Sink device 204 may transduce a magnetic field received via a wireless link into an alternating current (AC) power signal (702). For instance, Rx coil 222 may transduce magnetic field received via a wireless link between sink device 204 and a source device into an AC power signal that is provided to rectifier 224.

Sink device 204 may rectify the AC power signal into a rectified power signal (704). For instance, rectifier 224 may rectify the AC power signal into a rectified power signal having voltage level Vₒᵤₜ and current level I_{outWLC}. The rectified power signal, be it processed by an intervening LDO (e.g., as in FIG. 4 and FIG. 5) or not (e.g., as in FIG. 2 and FIG. 3), may be provided to a charger.

Sink device 204 may generate, from the rectified power signal, a converted power signal (706). For instance, charger 210 may use electrical energy from the rectified power signal to generate a converted power signal having current level I_{outC}. Charger 210 may provide the converted power signal to one or more loads, such as loads 212. As discussed above, in some examples, charger 210 may be unregulated in that the current level of the converted power signal may be a fixed multiple of a current level of the rectified power signal. As such, as also discussed above, sink device 204 may achieve regulation of the converted power signal via communication with the source device that is generating the magnetic field transduced by Rx coil 222.

Sink device 204 may communicate with an external device by toggling switches (708). For instance, controller 226 may communicate with a source device by toggling switches 274 and 276 between closed and open. As discussed above, controller 226 may use such toggling to send 0s and 1s to the external device.

In accordance with one or more aspects of this disclosure, sink device 204 may adaptively determine whether to set the switches as open or closed when not communicating (710). In general, controller 226 may determine to set the switches as closed when not communicating when such a setting is predicted to result in the voltage at the output of rectifier 224 when communicating using ASK (V_{rec_ASK}) is lower than the voltage at the output of rectifier 224 (V_{rec_norm}). Examples of various ways in which controller 226 may determine whether to set the switches as open or closed as discussed above with reference to FIGS. 3-5.

Responsive to determining to set the switches as closed ("Closed" branch of 710), sink device 204 may set the switches to closed when not communicating (712). For instance, controller 226 may output signals to switches 274 and 276 that causes switches 274 and 276 to close, thereby coupling capacitors 270 and 272 to ground.

Responsive to determining to set the switches as open ("Open" branch of 710), sink device 204 may set the switches to open when not communicating (714). For instance, controller 226 may output signals to switches 274 and 276 that causes switches 274 and 276 to open, thereby decoupling capacitors 270 and 272 from ground.

Sink device 204 may maintain switches 274 and 276 in the determined state while waiting for a next communication session (716). Sink device 204 may then communicate with the external device by toggling the switches (708).

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A computing device comprising:
a wireless charging receive coil that transduces, into an alternating current (AC) power signal, a magnetic field generated by a wireless charging transmit coil of an external device;
a rectifier that converts the AC signal received at an AC side of the rectifier into a direct current (DC) power signal output at a DC side of the rectifier;
a power converter configured to generate, using electrical energy received via the DC side of the rectifier, a load power signal;
a load configured to operate using the load power signal;
a first modulation capacitor connected to an upper rail of the AC side;
a second modulation capacitor connected to a lower rail of the AC side;
a first switch configured to selectively couple the first modulation capacitor to a ground;
a second switch configured to selectively couple the second modulation capacitor to the ground; and
a controller configured to:
toggle the first switch and the second switch to communicate with the external device;
determine, based on a comparison of voltage levels measured at the computing device, whether to set the first switch and the second switch as open or closed when not communicating with the external device; and
set, responsive to determining to set the first switch and the second switch as closed when not communicating with the external device, the first switch and the second switch as closed when not communicating with the external device.

2. The computing device of claim 1, wherein the controller is further configured to:
obtain an on voltage level at the DC side of the rectifier when the first switch and the second switch are closed; and
obtain an off voltage level at the DC side of the rectifier when the first switch and the second switch are open,
wherein, to determine whether to set the first switch and the second switch as open or closed when not communicating with the external device, the controller is configured to determine to set the first switch and the second switch as closed when not communicating with the external device responsive to determining that the on voltage level is greater than the off voltage level.

3. The computing device of claim 2, wherein, to determine whether to set the first switch and the second switch as open or closed when not communicating with the external device, the controller is configured to determine to set the first switch and the second switch as open when not communicating with the external device responsive to determining that the off voltage level is greater than the on voltage level.

4. The computing device of any of claims 1-3, further comprising a low-dropout regulator (LDO) configured to generate, using a first DC power signal received via the DC side of the rectifier, a second DC power signal, wherein the power converter is configured to generate the load power signal using the second DC power signal.

5. The computing device of claim 4 when dependent upon claim 1, wherein the controller is further configured to:
obtain, when the first switch and the second switch are closed, a voltage level of the first DC power signal and a voltage level of the second DC power signal,
wherein, to determine whether to set the first switch and the second switch as open or closed when not communicating with the external device, the controller is configured to determine to set the first switch and the second switch as closed when not communicating with the external device responsive to determining that the obtained voltage level of the first DC power signal is greater than the obtained voltage level of the second DC power signal.

6. The computing device of claim 5, wherein, to determine whether to set the first switch and the second switch as open or closed when not communicating with the external device, the controller is configured to determine to set the first switch and the second switch as open when not communicating with the external device responsive to determining that the obtained voltage level of the second DC power signal is greater than the obtained voltage level of the first DC power signal.

7. The computing device of any of claims 1-3, wherein the computing device does not include an intervening low-dropout regulator (LDO) between the rectifier and the power converter.

8. The device of any of claims 1-7, wherein the power converter comprises an unregulated power converter.

9. The device of any of claims 1-8, wherein the power converter is a first power converter that generates a first converted power signal to operate the electrical load, the device further comprising a second power converter that is configured to generate a second converted power signal to operate the electrical load.

10. The device of claim 9, wherein the second power converter comprises a regulated power converter included in a power management integrated circuit (PMIC).

11. The device of any of claims 1-10, wherein, to communicate with the external device, the controller is configured to send, to the external device, a request to adjust an amount of power transferred from the external device to the computing device.

12. A method comprising:
generating, by a rectifier of a mobile computing device, a rectified power signal using electrical energy received from an external device via a wireless link between the mobile computing device and the external device;
generating, by a power converter of the mobile computing device and from the rectified power signal, a converted power signal;
operating, by an electrical load of the mobile computing device, using the converted power signal;
communicating, by a controller of the mobile computing device and with the external device, by toggling a first switch and a second switch, the first switch selectively coupling a first modulation capacitor between an upper rail of an alternating current (AC) side of the rectifier to ground, and the second switch selectively coupling a second modulation capacitor between a lower rail of the AC side of the rectifier to ground;
determining, by the controller and based on a comparison of voltage levels measured at the mobile computing device, whether to set the first switch and the second switch as open or closed when not communicating with the external device; and
responsive to determining to set the first switch and the second switch as closed when not communicating with the external device, setting the first switch and the second switch as closed when not communicating with the external device.

13. The method of claim 12, further comprising:
obtaining an on voltage level at a direct current (DC) side of the rectifier when the first switch and the second switch are closed; and
obtaining an off voltage level at the DC side of the rectifier when the first switch and the second switch are open,
wherein determining whether to set the first switch and the second switch as open or closed when not communicating with the external device comprises determining to set the first switch and the second switch as closed when not communicating with the external device responsive to determining that the on voltage level is greater than the off voltage level.

14. The method of claim 12, further comprising:
generating, by a low-dropout regulator (LDO) and using a first DC power signal received via a direct current (DC) side of the rectifier, a second DC power signal.

15. The method of claim 14, further comprising:
obtaining, when the first switch and the second switch are closed, a voltage level of the first DC power signal and a voltage level of the second DC power signal,
wherein determining whether to set the first switch and the second switch as open or closed when not communicating with the external device comprises determining to set the first switch and the second switch as closed when not communicating with the external device responsive to determining that the obtained voltage level of the first DC power signal is greater than the obtained voltage level of the second DC power signal.
